# EUROPEAN PATENT APPLICATION

(11) **EP 4 852 161 A1**
(43) Date of publication of application: **09.12.2026**
(21) Application number: 26753450.1
(22) Date of filing: 02.01.2026
(51) Int. Cl.: H01M 50/105, H01M 50/178, H01M 50/183, H01M 10/04

(54) **POUCH-TYPE SECONDARY BATTERY AND MANUFACTURING METHOD THEREFOR**

(30) Priority: 08.04.2025 KR 20250045641; 15.12.2025 KR 20250199488
(71) Applicant: LG ENERGY SOLUTION, LTD., Seoul 07335 (KR)
(72) Inventor: KIM, Shin Chul, Daejeon 34122 (KR); KIM, Won Jin, Daejeon 34122 (KR); CHOI, Kwang Hee, Daejeon 34122 (KR)
(74) Representative: Goddar, Heinz J.
(86) International application number: PCT/KR2026/000009
(87) International publication number: WO 2026/216709

(57) **Abstract**

Disclosed are a pouch-shaped secondary battery and a method of manufacturing the same, and more particularly a pouch-shaped secondary battery including an electrode assembly including an electrode assembly body and a pair of tab bundles formed on at least one side of the electrode assembly body and a battery case including a first case and a second case located facing each other so as to receive the electrode assembly, wherein, in a cross-section of a tab bundle taken in a longitudinal direction of the electrode assembly and the battery case and a stacking direction of the tab bundle, the sectional area (A1) of the tab bundle exceeds 80% of the total sectional area (A) of a space portion, and a method of manufacturing the same.

## Description

### [Technical Field]

This application claims the benefit of priority to Korean Patent Application No. 10-2025-0045641 filed on April 8, 2025 and Korean Patent Application No. 10-2025-0199488 filed on December 15, 2025, the disclosure of which is incorporated herein by reference in its entirety.

The present invention relates to a pouch-shaped secondary battery and a method of manufacturing the same. More particularly, the present invention relates to a high-capacity pouch-shaped secondary battery configured such that the size of the space of a pouch-shaped battery case in which an electrode tab bundle is located is reduced so as to suppress the formation of voids in the electrode tab bundle and a method of manufacturing the same.

### [Background Art]

Lithium secondary batteries may be classified based on the shape of a battery case, and may include a pouch-shaped secondary battery using a laminate sheet including a metal layer and a resin layer in the state in which the laminate sheet is shaped, a cylindrical secondary battery using a metal can, and a prismatic secondary battery using a metal can.

The pouch-shaped secondary battery has the advantages of being freely deformable and having high energy density. Accordingly, a plurality of pouch-shaped secondary batteries may be stacked in tight contact, an electrical connection structure may be formed using a busbar assembly, and electrical components may be added to assemble a battery module and a battery pack.

Recently, as the demand for a higher-capacity battery module and battery pack including lithium secondary batteries has increased, there is a trend toward forming a cup portion of the pouch-shaped secondary battery deeper. As a result of such an increase in an internal space of the battery case, the space available for an electrode tab bundle to expand in the pouch-shaped battery case also increases.

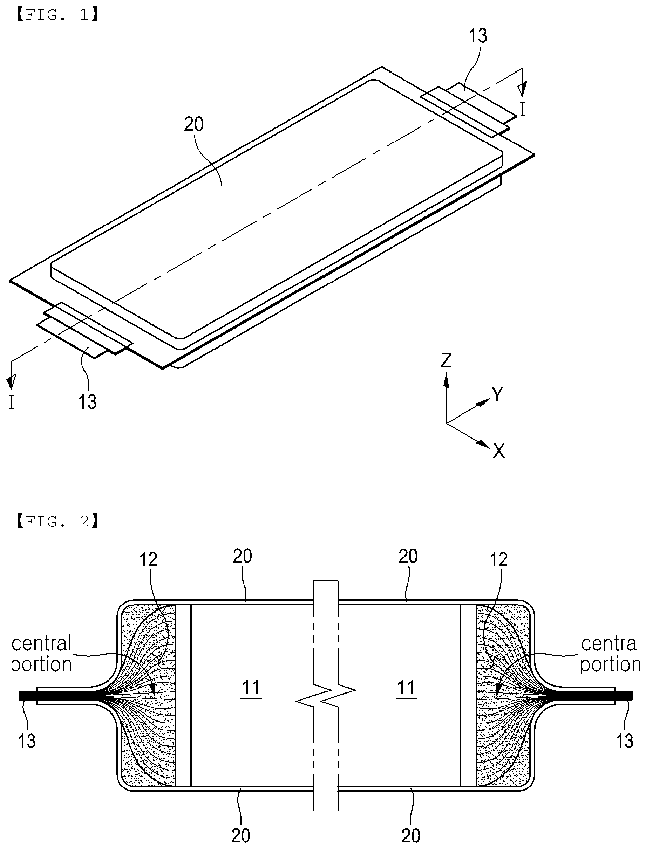

In this regard, FIG. 1 is a perspective view of a conventional general pouch-shaped secondary battery, and FIG. 2 is a vertical sectional view of the pouch-shaped secondary battery shown in FIG. 1, taken along line I-I.

Referring to FIGS. 1 and 2, the pouch-shaped secondary battery is manufactured by receiving an electrode assembly 10 in an internal space of a battery case 20 and sealing the battery case, wherein the electrode assembly 10 includes an electrode assembly body 11 configured such that a plurality of positive electrode plates and a plurality of negative electrode plates are stacked with separators interposed therebetween and a tab bundle 12 constituted by electrode tabs protruding from each end of the electrode assembly body 11 in a longitudinal direction Y.

The tab bundle 12 is connected to an electrode lead 13, and the electrode lead 13 protrudes outward from the battery case 20 to function as an electrode terminal.

In the lithium secondary battery, a swelling phenomenon in which a battery cell expands due to intercalation and deintercalation of lithium ions during a charge and discharge process inevitably occurs. If the size of an empty space in the battery case 20 outside the tab bundle is large, voids are likely to be formed around a central portion of the tab bundle 12 due to expansion and spreading apart of the tab bundle 12, and the size of the voids may increase. If the voids formed at the central portion of the tab bundle 12 grow larger, there is a high risk of electrode tab degradation and breakage caused by swelling.

Accordingly, various studies are being conducted to modify the internal space of the battery case 20.

Patent Document 1 relates to a sealed battery including a metal laminate resin film casing, wherein the radius of curvature of an inner surface of a central portion of a side that is a boundary between a side surface and an end surface of a cup portion is configured to be less than the radius of curvature of an inner surface of a corner portion of the side.

Patent Document 1 suggests that adopting the above configuration prevents pinholes from being formed during shaping of the cup portion and increases the amount of electrolyte that is injected; however, this patent document does not propose a method of reducing the possibility of voids being formed at the central portion of the tab bundle.

Patent Document 2 relates to a pouch-shaped battery case including a plurality of die edges interconnecting an outer wall of a cup portion configured to receive an electrode assembly and side surfaces extending from the outer wall, wherein the plurality of die edges includes a first region rounded with a first radius of curvature and a second region, which is a region other than the first region, the second region being rounded with one or more second radii of curvature equal to or less than the first radius of curvature.

Patent Document 2 discloses technology for preventing interference between the die edges and an electrode tab by differently setting the radii of curvature of the die edges extending to the side surfaces of the cup portion and a sealed portion depending on the positions thereof. Therefore, Patent Document 2 also fails to propose technology for preventing formation of voids due to expanding and spreading apart of a central portion of a tab bundle.

### (Prior Art Documents)

(Patent Document 1) Japanese Patent Application Publication No. 2005-294212 (2005.10.20)
(Patent Document 2) Korean Patent Application Publication No. 2022-0135568 (2022.10.07)

### [Disclosure]

### [Technical Problem]

The present invention has been made in view of the above problems, and it is an object of the present invention to provide a pouch-shaped secondary battery capable of preventing electrode tab bundles from spreading apart even if swelling occurs in the pouch-shaped secondary battery and a method of manufacturing the same.

### [Technical Solution]

A pouch-shaped secondary battery according to the present invention to accomplish the above object includes an electrode assembly (100) including an electrode assembly body (110) and a pair of tab bundles (120) formed on at least one side of the electrode assembly body (110) and a battery case (200) including a first case (210), and a second case (220) facing the first case (210) to receive the electrode assembly (100), wherein, in a cross-section of a tab bundle taken along a longitudinal direction of the electrode assembly (100) and the battery case (200) and a stacking direction of the tab bundle, the sectional area (A1) of the tab bundle exceeds 80% of the total sectional area (A) of a space portion.

Also, in the pouch-shaped secondary battery according to the present invention, in a cross-section of the tab bundle (120) taken along the longitudinal direction of the electrode assembly (100) and the battery case and the stacking direction of the tab bundle, the sectional area (A1) of the tab bundle may exceed 90% of the total sectional area (A) of the space portion.

Also, in the pouch-shaped secondary battery according to the present invention, in a cross-section of the tab bundle (120) taken along the longitudinal direction of the electrode assembly (100) and the battery case and the stacking direction of the tab bundle, the sectional area (A1) of the tab bundle may exceed 95% of the total sectional area (A) of the space portion.

Also, in the pouch-shaped secondary battery according to the present invention, at least a part of the outermost tab of the tab bundle (120) may be in tight contact with an inner surface of the space portion.

Also, in the pouch-shaped secondary battery according to the present invention, a bending start end (B) of the outermost tab of the tab bundle is in tight contact with an edge of the space portion.

Also, in the pouch-shaped secondary battery according to the present invention, the first case (210) may include a 1a surface (211) forming a lower surface, a pair of 1b surfaces (212) located in a longitudinal direction of the 1a surface (211) to form side surfaces, a pair of 1c surfaces (213) located in a width direction of the 1a surface (211) to form side surfaces, a pair of 1a edges (214) interconnecting the 1a surface (211) and the 1b surfaces (212), and a pair of 1b edges (215) interconnecting the 1a surface (211) and the 1c surfaces

(213), and the radius of curvature of at least a part of the 1b edges (215) may be greater than the radius of curvature of the 1a edges (214).

Also, in the pouch-shaped secondary battery according to the present invention, the 1b edge (215) may include a 1b' edge (215'), and the radius of curvature of the 1b' edge (215') may be greater than the radius of curvature of the remaining part of the 1b edge (215) excluding the 1b' edge (215').

Also, in the pouch-shaped secondary battery according to the present invention, the 1b' edge (215') may be located overlapping the tab bundle (120).

Also, in the pouch-shaped secondary battery according to the present invention, the second case (220) may include a 2a surface (221) forming an upper surface, a pair of 2b surfaces (222) located in a longitudinal direction of the 2a surface (221) to form side surfaces, a pair of 2c surfaces (223) located in a width direction of the 2a surface (221) to form side surfaces, a pair of 2a edges (224) interconnecting the 2a surface (221) and the 2b surfaces (222), and a pair of 2b edges (225) interconnecting the 2a surface (221) and the 2c surfaces (223), and the radius of curvature of at least a part of the 2b edges (225) may be greater than the radius of curvature of the 2a edges (224).

Also, in the pouch-shaped secondary battery according to the present invention, the 2b edge (225) comprises a 2b' edge (225'), and the radius of curvature of the 2b' edge (225') may be greater than the radius of curvature of the remaining part of the 2b edge (225) excluding the 2b' edge (225').

Also, in the pouch-shaped secondary battery according to the present invention, the 2b' edge (225') may be located overlapping the tab bundle (120).

In addition, the present invention provides a method of manufacturing the pouch-shaped secondary battery, the method including a first step of preparing a battery case (200) by shaping a laminate sheet, a second step of receiving an electrode assembly (100) in the battery case (200), and a third step of sealing an outer periphery of the battery case (200).

In addition, the present invention may provide various combinations of the above solving means.

### [Advantageous Effects]

According to the present invention, a specific region of a battery case is adjacent to or in tight contact with an upper part and/or a lower part of a tab bundle of an electrode assembly, whereby it is possible to minimize the expansion of the tab bundle even if swelling occurs.

Consequently, it is possible to resolve the problem of electrode tab degradation and breakage during a charging and discharging process of a battery cell.

### [Description of Drawings]

FIG. 1 is a perspective view of a conventional general pouch-shaped secondary battery.
FIG. 2 is a vertical sectional view of the pouch-shaped secondary battery shown in FIG. 1, taken along line I-I.
FIG. 3 is a perspective view of a pouch-shaped secondary battery according to a first embodiment of the present invention.
FIG. 4 is an exploded perspective view of the pouch-shaped secondary battery shown in FIG. 3 when viewed in a first direction.
FIG. 5 is an exploded perspective view of the pouch-shaped secondary battery shown in FIG. 3 when viewed in a second direction.
FIG. 6 is a vertical sectional view taken along line I-I in the perspective view of FIG. 3.
FIG. 7 is a vertical sectional view taken along line II-II in the perspective view of FIG. 3.
FIG. 8 is a vertical sectional view taken along line III-III in the perspective view of FIG. 3.
FIG. 9 is a perspective view of a pouch-shaped secondary battery according to a second embodiment of the present invention.
FIG. 10 is an exploded perspective view of the pouch-shaped secondary battery shown in FIG. 9 when viewed in a first direction.
FIG. 11 is an exploded perspective view of the pouch-shaped secondary battery shown in FIG. 9 when viewed in a second direction.
FIG. 12 is a vertical sectional view taken along line IV-IV in the perspective view of FIG. 9.
FIG. 13 is a vertical sectional view of a pouch-shaped secondary battery according to a third embodiment of the present invention, taken in a longitudinal direction.
FIG. 14 is a perspective view of a punch for forming a battery case according to a first embodiment of the present invention.
FIG. 15 is a perspective view of a punch for forming a battery case according to a second embodiment of the present invention.
FIG. 16 shows experimental results according to an example.
FIG. 17 shows experimental results according to a comparative example.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the drawings.

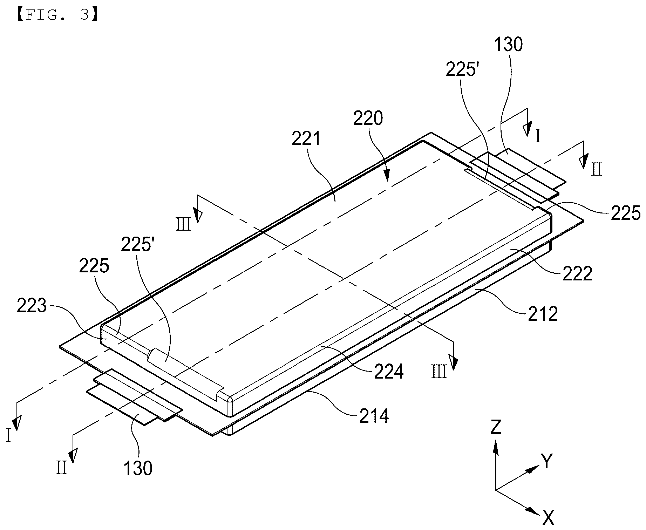

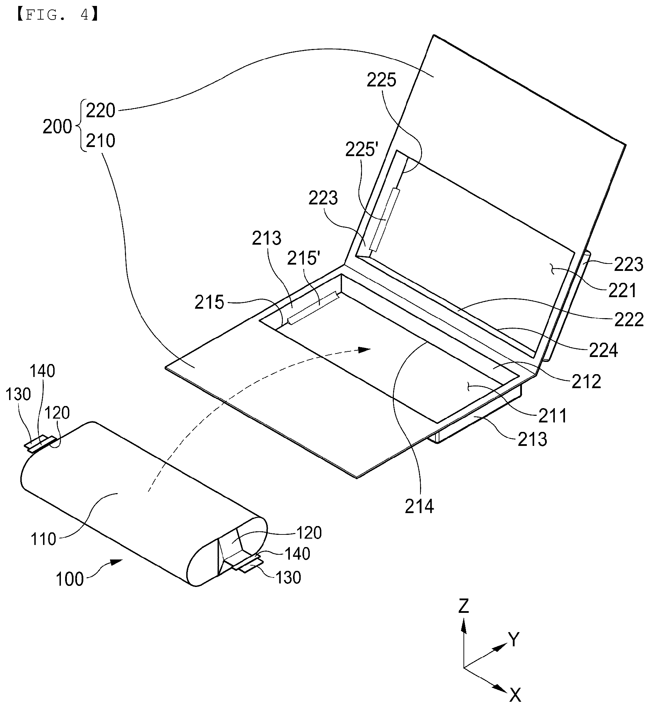

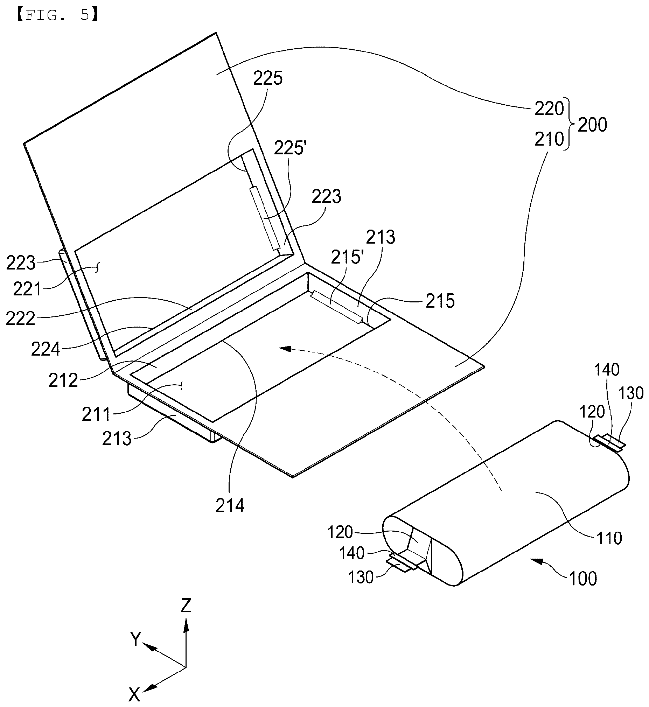

FIG. 3 is a perspective view of a pouch-shaped secondary battery according to a first embodiment of the present invention, FIG. 4 is an exploded perspective view of the pouch-shaped secondary battery shown in FIG. 3 when viewed in a first direction, and FIG. 5 is an exploded perspective view of the pouch-shaped secondary battery shown in FIG. 3 when viewed in a second direction.

In the specification of the present invention, "first direction" and "second direction" do not refer to specific directions; rather, the first direction and the second direction refer to directions that are mirror-symmetrical to each other. In addition, a space portion of a battery case refers to the space in which a tab bundle is located.

In the pouch-shaped secondary battery according to the present invention, when a pair of tab bundles 120 is cut in a longitudinal direction of an electrode assembly 100 and a battery case 200 and a stacking direction of the tab bundle 120 so as to pass through the tab bundle, the sectional area A1 of the tab bundle may exceed 80% of the total sectional area A of a space portion; however, it is preferable for the sectional area A1 of the tab bundle to exceed 90% of the total sectional area A of the space portion, it is more preferable for the sectional area A1 of the tab bundle to exceed 95% of the total sectional area A of the space portion, and it is most preferable for the sectional area A1 of the tab bundle to be 0% of the total sectional area A of the space portion, i.e., for the sectional area A2 of a tab bundle unfilled region to be eliminated such that the entire space portion is filled with the tab bundle 120.

Referring to FIGS. 3 to 5, the pouch-shaped secondary battery according to the present invention includes a battery case 200 manufactured by shaping a laminate sheet including a metal layer and a resin layer and an electrode assembly 100 received in the battery case 200.

The battery case 200 includes a first case 210 and a second case 220, and outer peripheries of the first case 210 and the second case 220 may be sealed by thermal fusion.

The first case 210 may be provided with a first cup portion configured to receive the electrode assembly 100, wherein the first cup portion includes a 1a surface 211 forming a lower surface, a pair of 1b surfaces 212 located in a longitudinal direction Y of the 1a surface 211 to form side surfaces, a pair of 1c surfaces 213 located in a width direction X of the 1a surface 211 to form side surfaces, a pair of 1a edges 214 interconnecting the 1a surface 211 and the 1b surfaces 212, and a pair of 1b edges 215 interconnecting the 1a surface 211 and the 1c surfaces 213.

The second case 220 is disposed so as to face the first case 210, and may be provided with a second cup portion configured to receive the electrode assembly. The second cup portion includes a 2a surface 221 forming an upper surface, a pair of 2b surfaces 222 located in the longitudinal direction Y of the 2a surface 221 to form side surfaces, a pair of 2c surfaces 223 located in the width direction X of the 2a surface 221 to form side surfaces, a pair of 2a edges 224 interconnecting the 2a surface 221 and the 2b surfaces 222, and a pair of 2b edges 225 interconnecting the 2a surface 221 and the 2c surfaces 223.

The electrode assembly 100 includes an electrode assembly body 110 in which a plurality of positive electrode plates and a plurality of negative electrode plates are alternately stacked with separators interposed therebetween and a pair of tab bundles 120 formed on at least one of outer surfaces of the electrode assembly body 110. The pair of tab bundles 120 includes a positive electrode tab bundle and a negative electrode tab bundle, wherein the positive electrode tab bundle and the negative electrode tab bundle may be formed at different outer surfaces of the electrode assembly body 110, or may be formed at the same outer surface of the electrode assembly body. Although the electrode assembly 100 shown in FIGS. 3 to 5 is a bidirectional electrode assembly in which the tab bundles 120 are located at opposite ends thereof in the longitudinal direction Y, the electrode assembly of the present invention is not limited thereto.

An electrode lead 130 is coupled to the end of each of the pair of tab bundles 120 opposite the electrode assembly body 110, and the electrode lead 130 protrudes outward from the battery case 200 to function as an electrode terminal. When the electrode lead 130 is disposed so as to penetrate the battery case 200, a lead film 140 may be attached to the electrode lead 130 to prevent a reduction in the sealing force between the electrode lead 130 and the battery case 200.

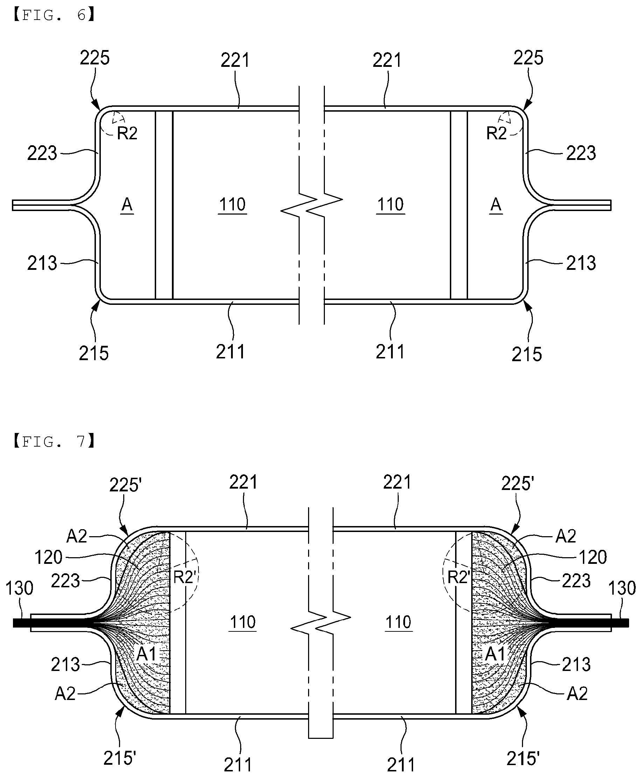

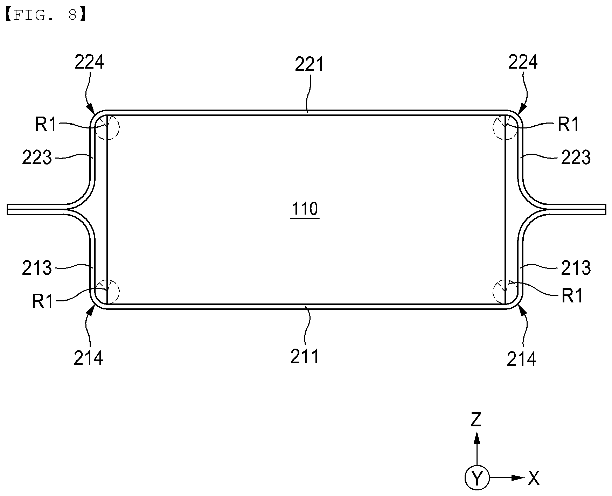

FIG. 6 is a vertical sectional view taken along line I-I in the perspective view of FIG. 3, FIG. 7 is a vertical sectional view taken along line II-II in the perspective view of FIG. 3, and FIG. 8 is a vertical sectional view taken along line III-III in the perspective view of FIG. 3.

Referring to FIGS. 3 to 8, in the first case 210 of the pouch-shaped secondary battery according to the first embodiment, the radii of curvature R2 and R2' of at least a part of the 1b edge 215 are greater than the 1a radius of curvature R1 of the 1a edge 214.

That is, the radii of curvature R2 and R2' of at least a part of the 1b edge 215, which is parallel to the width direction X, are configured to be greater than the 1a radius of curvature R1 of the 1a edge 214, which is parallel to the longitudinal direction Y.

Comparing FIGS. 3, 6, and 7, the 1b edge 215 includes a 1b' edge 215' formed at a part thereof, and the radius of curvature R2' of the 1b' edge 215' is greater than the 1b radius of curvature R2 of the remaining part of the 1b edge 215 excluding the 1b' edge 215'.

Specifically, the 1b' edge 215' is located so as to correspond to a first outer surface of the tab bundle 120, which is a lower surface of the tab bundle in the stacking direction Z.

Since the 1b' radius of curvature R2' of the 1b' edge 215' facing the lower surface of the tab bundle 120 in the stacking direction Z is configured to be greater than the radius of curvature R2 of each of the 1a edge 214 and the 1b edge 215, as described above, the distance between an inner surface of the first case 210 and the tab bundle 120 may decrease, or the first case 210 and the tab bundle 120 may come into tight contact with each other. Meanwhile, the 1b radius of curvature R2 of the 1b edge 215 may be formed so as to be equal to or greater than the 1a radius of curvature R1 of the 1a edge 214.

Furthermore, in the second case 220 of the pouch-shaped secondary battery according to the first embodiment, the radii of curvature R2 and R2' of at least a part of the 2b edge 225 are greater than the 2a radius of curvature R1 of the 2a edge 224.

That is, the radii of curvature R2 and R2' of at least a part of the 2b edge 225, which is parallel to the width direction X, are configured to be greater than the 2a radius of curvature R1 of the 2a edge 224, which is parallel to the longitudinal direction Y.

Furthermore, the 2b edge 225 includes a 2b' edge 225' formed at a part thereof, and the 2b' radius of curvature R2' of the 2b' edge 225' than the 2b radius of curvature R2 of the remaining part of the 2b edge 225 excluding the 2b' edge 225'.

In this case, the 2b' edge 225' is located so as to correspond to a second outer surface of the tab bundle 120, which is an upper surface of the tab bundle in the stacking direction Z.

Since, in the pair of 1b edge 215 and the pair of 2b edge 225, the radius of curvature R2' of the 2b' edge 225' facing the upper surface of the tab bundle 120 in the stacking direction Z is configured to be greater than the radius of curvature R2 of each of the 2a edge 224 and the 2b edge 225, as described above, the distance between an inner surface of the second case 220 and the tab bundle 120 may decrease, or the second case 220 and the tab bundle 120 may come into tight contact with each other.

Meanwhile, the 2b radius of curvature R2 of the 2b edge 225 may be formed to be equal to or greater than the 2a radius of curvature R1 of the 2a edge 224.

Since, in the pair of 1b edge 215 and the pair of 2b edge 225, the radius of curvature R2' of each of the 1b' edge 215' and the 2b' edge 225' facing the upper surface of the tab bundle 120 in the stacking direction Z is configured to be greater than the radius of curvature R2 of a corresponding one of the 1b edge 215 and the 2b edge 225, as described above, the excess space formed in the battery case may be reduced, thereby minimizing the spreading apart of the electrode tab bundle caused by external force and swelling. In addition, it is possible to prevent folding or wrinkling of the electrode tabs and to improve the tensile strength of the electrode tabs and resistance to breakage of the electrode tabs. Furthermore, it is possible to prevent an electrode mixture layer from lifting or breaking due to swelling of the electrode assembly.

In particular, when the thickness of the electrode mixture layer is relatively small on the side of the electrode assembly 100 at which the tab bundle 120 is located, the excess space of the space portion excluding the volume occupied by the tab bundle 120 may increase; however, this problem may be prevented by providing the cup portion according to the present invention.

Here, each of the 1a radius of curvature R1 and the 2a radius of curvature R2 may be 0.5 mm to 1.5 mm, each of the 1b radius of curvature R2 and the 2b radius of curvature R2 may be 0.5 mm to 1.5 mm, and each of the 1b' radius of curvature R2' and the 2b' radius of curvature R2' may be 2.5 mm to 3.5 mm.

In the present invention, the space required for the tab bundle 120 to expand may be substantially eliminated by providing the battery case having the above configuration, and this may reduce the likelihood of problems such as short circuit caused by expansion of the central portion of the tab bundle 120 even if swelling occurs during charging and discharging of the pouch-shaped secondary battery.

In the 1b edge 215 and the 2b edge 225, the 1b' edge 215' and the 2b' edge 225' may be formed so as to correspond in position to the tab bundle 120, and, for example, may be formed so as to be located at the central portion of the tab bundle or offset toward one side of the tab bundle.

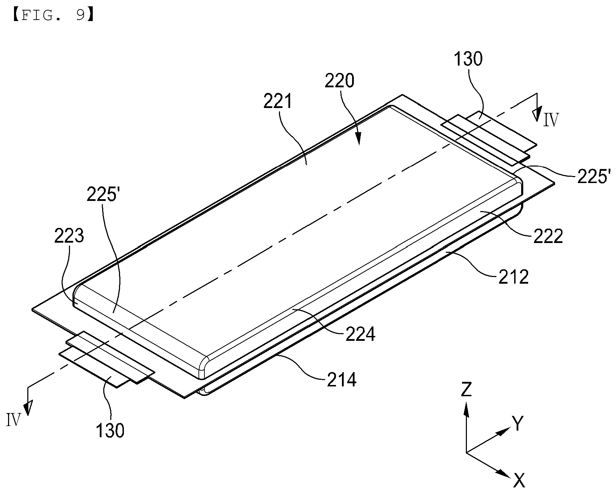

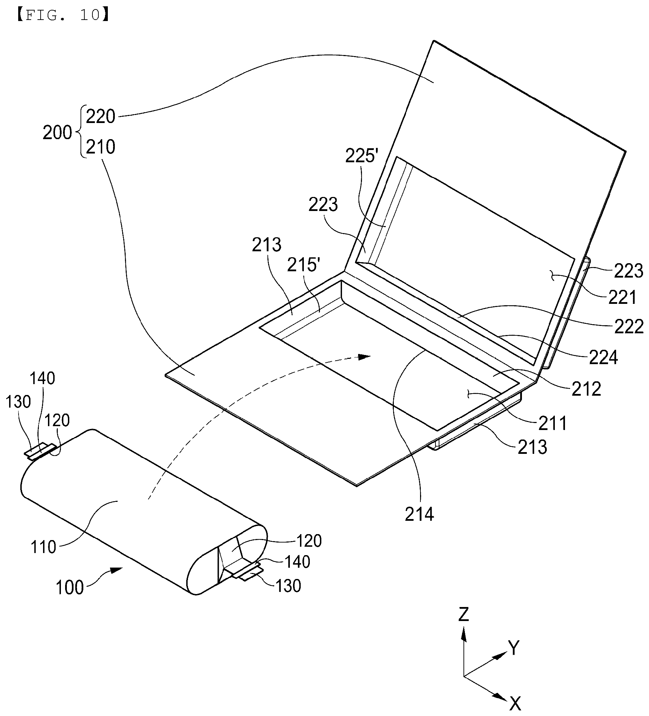

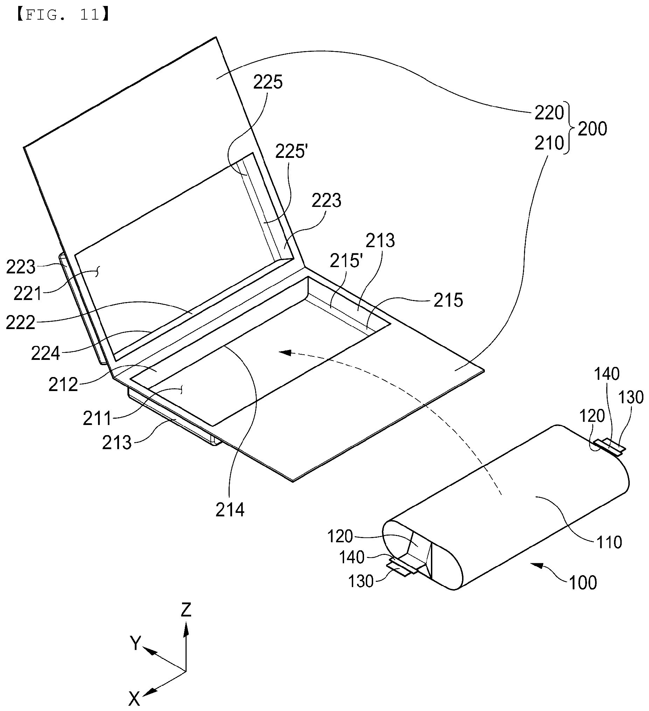

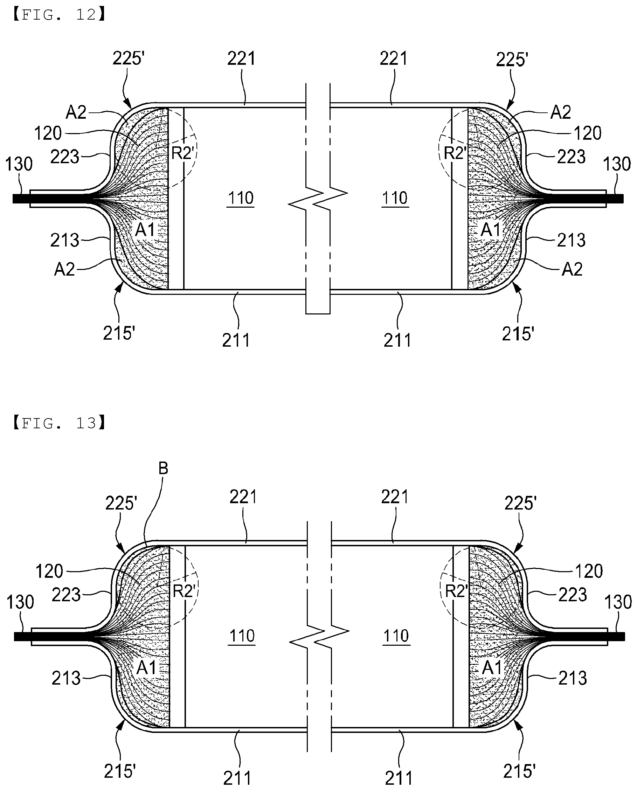

FIG. 9 is a perspective view of a pouch-shaped secondary battery according to a second embodiment of the present invention. FIG. 10 is an exploded perspective view of the pouch-shaped secondary battery shown in FIG. 9 when viewed in a first direction, FIG. 11 is an exploded perspective view of the pouch-shaped secondary battery shown in FIG. 9 when viewed in a second direction, and FIG. 12 is a is a vertical sectional view taken along line IV-IV in the perspective view of FIG. 9.

The first direction and the second direction are the same as those described with reference to FIGS. 4 and 5.

The pouch-shaped secondary battery according to the second embodiment is identical to the pouch-shaped secondary battery according to the first embodiment except that the radius of curvature of the entirety of a 1b edge of a first case 210 parallel to the width direction X is uniform or the radius of curvature of the entirety of a 2b edge 225 of a second case 220 parallel to the width direction X is uniform, and therefore a redundant description thereof will be omitted.

Specifically, in the first case 210 of the pouch-shaped secondary battery according to the second embodiment, the radius of curvature of the entirety of each of a pair of 1b edges 215 interconnecting a 1a surface 211 and 1c surfaces 213 is a 1b' radius of curvature R2', which is uniform, and in this case, the 1b' radius of curvature R2' is greater than the 1a radius of curvature R1, which is the radius of curvature of a 1a edge 214.

Furthermore, in the second case 220 of the pouch-shaped secondary battery according to the second embodiment, the radius of curvature of the entirety of each of a pair of 2b edges 225 interconnecting a 2a surface 221 and 2c surfaces 223 is a 2b' radius of curvature R2', which is uniform, and in this case, the 2b' radius of curvature R2' is greater than the 2a radius of curvature R1, which is the radius of curvature of a 2a edge 224.

Since the entirety of each of the pair of 1b edges 215 and/or the entirety of each of the pair of 2b edges 225 are configured to have a 1b' radius of curvature R2' and/or a 2b' radius of curvature R2' greater than the 1a radius of curvature R1 and the 2a radius of curvature R1, as described above, it is possible to receive various types of electrode assemblies 100 regardless of where the tab bundle 120 is located in the width direction X of the 1a surface 211 and the 2a surface 221 and regardless of the size of the tab bundle in the width direction X.

FIG. 13 is a vertical sectional view of a pouch-shaped secondary battery according to a third embodiment of the present invention, taken in a longitudinal direction.

The third embodiment is identical to the first embodiment except that a tab bundle 120 is substantially in tight contact with an inner surface of a space portion of a first case 210 and/or an inner surface of a space portion of a second case 220.

Specifically, an outermost tab of the tab bundle 120 located in the space portion of the first case 210 is bent so as to correspond to the radius of curvature of a 1b' edge 215', and at this time, a bending start end B, from which bending starts, is in tight contact with the 1b' edge 215', and therefore the sectional area A1 of the tab bundle may not substantially exist based on the sectional area of the space portion of the first case 210.

In addition, an outermost tab of the tab bundle 120 located in the space portion of the second case 220 is bent so as to correspond to the radius of curvature of a 2b' edge 225', and at this time, a bending start end B, from which bending starts, is in tight contact with the 2b' edge 225', and therefore the sectional area A1 of the tab bundle may not substantially exist based on the sectional area of the space portion of the second case 220.

Although FIG. 13 shows that the number of tabs constituting the tab bundle is increased compared to FIG. 7 such that the outermost tab is in tight contact with an inner surface of the space portion of each of the first case 210 and the second case 220, this is merely an example, and it is obvious that this can be achieved by adjusting the 1b' radius of curvature and the 2b' radius of curvature.

Hereinafter, a method of manufacturing a pouch-shaped secondary battery according to the present invention will be described.

The method of manufacturing the pouch-shaped secondary battery according to the present invention includes a first step of preparing a battery case 200 by shaping a laminate sheet, a second step of receiving an electrode assembly 100 in the battery case 200, and a third step of sealing an outer periphery of the battery case 200.

In the first step of shaping the laminate sheet, a punch configured to press the laminate sheet in order to form a cup portion and a die having a recess configured to receive the punch configured to press the laminate sheet are prepared.

After the battery case, in which the cup portion has been formed by pressing of the punch, is separated from the die, the electrode assembly is received in the cup portion, and the outer periphery of the battery case is sealed by thermal fusion.

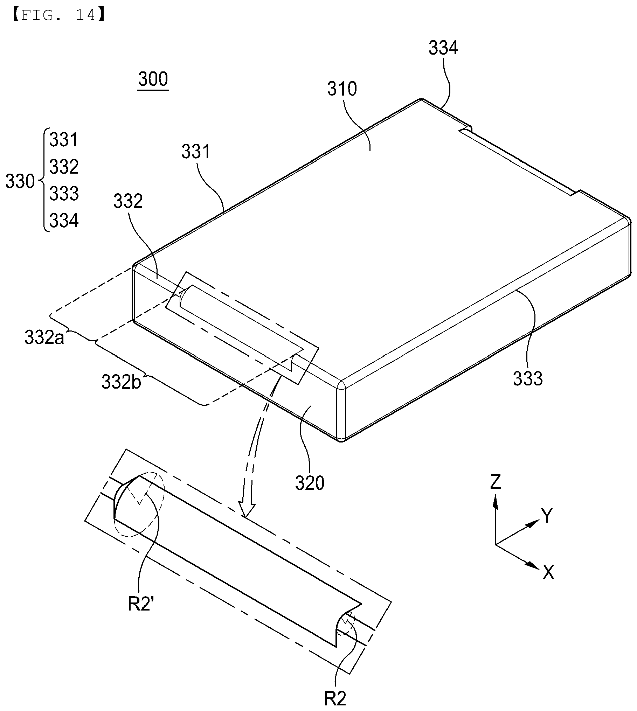

FIG. 14 is a perspective view of a punch for forming a battery case according to a first embodiment of the present invention.

Referring to FIGS. 3 to 8 and 14, the punch is configured to form a first case and/or a second case of the battery case according to the first embodiment, and thus has a shape corresponding to the outer shape of the first case and/or the second case.

The punch 300 includes a first tight contact surface 310 facing an upper surface of the die and a plurality of second tight contact surfaces 320 connected to the first tight contact surface 310 to form side surfaces, wherein an edge 330 interconnecting the first tight contact surface 310 and the second tight contact surfaces 320 is formed in a curved shape having a predetermined radius of curvature.

The edge 330 is formed in a quadrangular frame shape when viewed in a plan view, and includes a first edge 331, a second edge 332, a third edge 333, and a fourth edge 334 connected to each other at both ends. The first edge 331 and the third edge 333 are edges located parallel to each other in the longitudinal direction Y, and the second edge 332 and the fourth edge 334 are edges located parallel to each other in the width X.

In order to form a 1b edge and a 1b' edge of the first case and a 2b edge and a 2b' edge of the second case, the radius of curvature of a second region 332b of each of the second edge 332 and the fourth edge 334 is different from the radius of curvature of a first region 332a.

That is, the radius of curvature of the first region 332a may be equal to the radius of curvature R2 of each of the 1b edge 215 of the first case 210 and the 2b edge 225 of the second case 220, and the radius of curvature of the second region 332b may be equal to the radius of curvature R2' of each of the 1b' edge 215' of the first case 210 and the 2b' edge 225' of the second case 220.

Although FIG. 13 shows that the second region 332b, which is a part having a relatively large radius of curvature, is located at a central portion of each of the second edge 332 and the fourth edge 334, the second region may be formed offset to one side so as to correspond in position to a tab bundle in an electrode assembly.

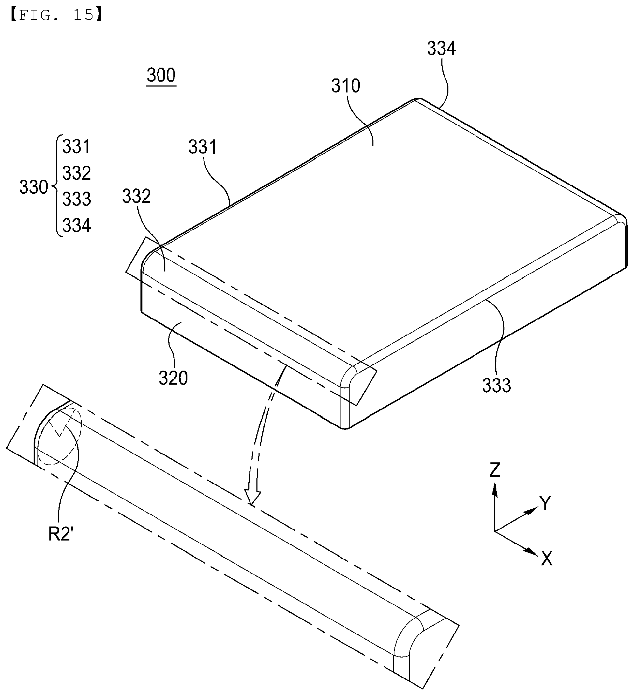

FIG. 15 is a perspective view of a punch for forming a battery case according to a second embodiment of the present invention.

Referring to FIGS. 9 to 12 and 15, the punch is configured to form a first case and/or a second case of the battery case according to the second embodiment, and thus has a shape corresponding to the outer shape of the first case and/or the second case.

In order to form a 1b edge of the first case and a 2b edge of the second case, the radii of curvature of a second edge 332 and a fourth edge 334 are equal to the radii of curvature thereof.

The other configurations are identical to those of the punch described with reference to FIG. 14, and therefore a redundant description thereof will be omitted.

Hereinafter, the present invention will be described with reference to an example. However, the example is provided only for easier understanding of the present invention and should not be construed as limiting the scope of the present invention.

### <Example>

As shown in FIG. 3, a pouch-shaped secondary battery shaped such that the radius of curvature of each of a 1b edge and a 2b edge was 0.5 mm and the radius of curvature of each of a 1b' edge and a 2b' edge was 3 mm was prepared.

A Keyence VR-3000 was used to measure the radius of curvature.

The pouch-shaped secondary battery was charged at 55°C with a constant current (CC) of 0.98 C until the voltage reached 4.2 V, and then charging was continued under a constant voltage (CV) mode until the charging current reached 20.04 A. After leaving the pouch-shaped secondary battery for 1 minute, the pouch-shaped secondary battery was discharged at a constant current (CC) of 61.08 A until the voltage reached 2.5 V. This charge and discharge cycle was performed twice.

### <Comparative Example>

As shown in FIG. 1, a pouch-shaped secondary battery shaped such that the radius of curvature of the entirety of each of a 1b edge and a 2b edge was 0.5 mm was prepared.

Charging and discharging were performed using the same method as in the example.

### <Experimental Example>

After conducting charge-discharge tests on the pouch-shaped secondary batteries manufactured in the example and the comparative example under the conditions described in the example, CT scans were performed on a tab bundle from the side.

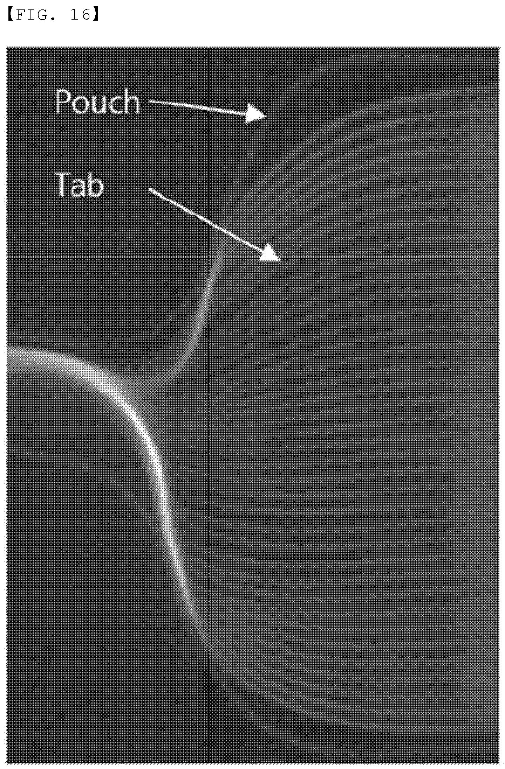

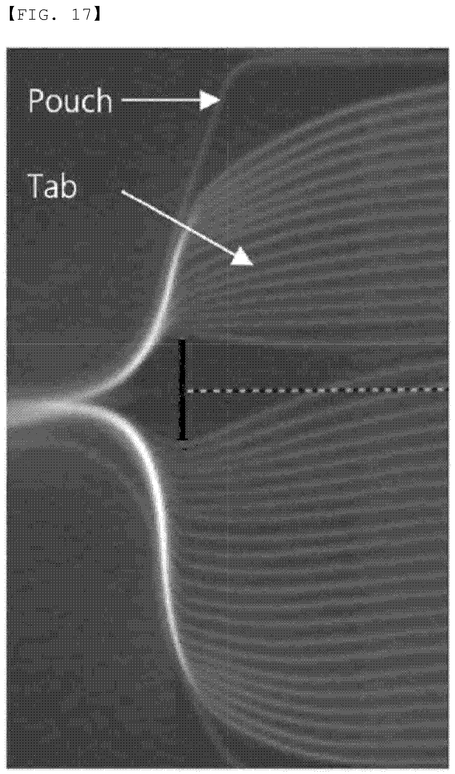

FIG. 16 is a CT image showing the experimental results according to the example, and FIG. 17 is a CT image showing the experimental results according to the comparative example.

Referring to FIG. 16, it can be seen that, when using the battery case according to the present invention, the area occupied by the tab bundle in the space portion generally accounts for more than 90% to 95% of the total sectional area of the space portion shown in the CT image although the area varies somewhat depending on the position of the section of the tab bundle in the stacking direction.

Referring to FIG. 17, it can be seen that, when using the battery case according to the comparative example, the area occupied by the tab bundle in the space portion generally accounts for 70% or less of the total sectional area of the space portion shown in the CT image although the area varies somewhat depending on the position of the section of the tab bundle in the stacking direction.

Meanwhile, in FIG. 16, in which the battery case according to the present invention is used, the tabs remain in tight contact without any voids forming at the central portion of the tab bundle even after charging and discharging. However, in FIG. 17, in which the conventional battery case is used, it can be seen that the tabs have spread apart at the central portion of the tab bundle, forming voids after charging and discharging. In FIG. 17, which shows the results of the comparative example, there is a relatively high probability of electrode tab degradation and breakage occurring due to the voids.

Those skilled in the art to which the present invention pertains will appreciate that various applications and modifications are possible within the scope of the present invention based on the above description.

### (Description of Reference Symbols)

10, 100: Electrode assembly
11, 110: Electrode assembly body
12, 120: Tab bundle
13, 130: Electrode lead
20, 200: Battery case
140: Lead film
210: First case
211: 1a surface 212: 1b surface
213: 1c surface 214: 1a edge
215: 1b edge 215': 1b' edge
220: Second case
221: 2a surface 222: 2b surface
223: 2c surface 224: 2a edge
225: 2b edge 225': 2b' edge
300: Punch
310: First tight contact surface 320: Second tight contact surface
330: Edge
331: First edge 332: Second edge
332a: First region 332b: Second region
333: Third edge 334: Fourth edge
A: Total sectional area of space portion
A1: Sectional area of tab bundle
A2: Sectional area of tab bundle unfilled region
B: Bending start end
R1: 1a radius of curvature, 2a radius of curvature
R2: 1b radius of curvature, 2b radius of curvature
R2': 1b' radius of curvature, 2b' radius of curvature

## Claims

1. A pouch-shaped secondary battery comprising:
an electrode assembly comprising an electrode assembly body and a pair of tab bundles formed on at least one side of the electrode assembly body; and
a battery case comprising a first case, and a second case facing the first case to receive the electrode assembly,
wherein, in a cross-section of a tab bundle taken along a longitudinal direction of the electrode assembly and the battery case and a stacking direction of the tab bundle, a sectional area of the tab bundle exceeds 80% of a total sectional area of a space portion.

2. The pouch-shaped secondary battery according to claim 1, wherein, in a cross-section of the tab bundle taken along the longitudinal direction of the electrode assembly and the battery case and the stacking direction of the tab bundle, the sectional area of the tab bundle exceeds 90% of the total sectional area of the space portion.

3. The pouch-shaped secondary battery according to claim 2, wherein, in a cross-section of the tab bundle taken along the longitudinal direction of the electrode assembly and the battery case and the stacking direction of the tab bundle, the sectional area of the tab bundle exceeds 95% of the total sectional area of the space portion.

4. The pouch-shaped secondary battery according to claim 3, wherein at least a part of an outermost tab of the tab bundle is in tight contact with an inner surface of the space portion.

5. The pouch-shaped secondary battery according to claim 4, wherein a bending start end of the outermost tab of the tab bundle is in tight contact with an edge of the space portion.

6. The pouch-shaped secondary battery according to claim 2, wherein the first case comprises a 1a surface forming a lower surface, a pair of 1b surfaces located in a longitudinal direction of the 1a surface to form side surfaces, a pair of 1c surfaces located in a width direction of the 1a surface to form side surfaces, a pair of 1a edges interconnecting the 1a surface and the 1b surfaces, and a pair of 1b edges interconnecting the 1a surface and the 1c surfaces, and
wherein a radius of curvature of at least a part of the 1b edges is greater than a radius of curvature of the 1a edges.

7. The pouch-shaped secondary battery according to claim 6, wherein the 1b edge comprises a 1b' edge, and
wherein a radius of curvature of the 1b' edge is greater than a radius of curvature of a remaining part of the 1b edge excluding the 1b' edge.

8. The pouch-shaped secondary battery according to claim 7, wherein the 1b' edge is located overlapping the tab bundle.

9. The pouch-shaped secondary battery according to claim 2, wherein
the second case comprises a 2a surface forming an upper surface, a pair of 2b surfaces located in a longitudinal direction of the 2a surface to form side surfaces, a pair of 2c surfaces located in a width direction of the 2a surface to form side surfaces, a pair of 2a edges interconnecting the 2a surface and the 2b surfaces, and a pair of 2b edges interconnecting the 2a surface and the 2c surfaces, and
a radius of curvature of at least a part of the 2b edges is greater than a radius of curvature of the 2a edges.

10. The pouch-shaped secondary battery according to claim 9, wherein the 2b edge comprises a 2b' edge, and a radius of curvature of the 2b' edge is greater than a radius of curvature of a remaining part of the 2b edge excluding the 2b' edge.

11. The pouch-shaped secondary battery according to claim 10, wherein the 2b' edge is located overlapping the tab bundle.

12. A method of manufacturing the pouch-shaped secondary battery according to any one of claims 1 to 11, the method comprising:
a first step of preparing a battery case by shaping a laminate sheet;
a second step of receiving an electrode assembly in the battery case; and
a third step of sealing an outer periphery of the battery case.
